# NEUE EUROPÄISCHE PATENTSCHRIFT

(11) **EP 2 935 941 B2**
(45) Veröffentlichungstag und Bekanntmachung des Hinweises auf die Entscheidung über den Einspruch: **11.11.2026**
(45) Hinweis auf die Patenterteilung: 28.07.2021
(21) Anmeldenummer: 13814929.9
(22) Anmeldetag: 20.12.2013
(51) Int. Cl.: F16G 13/16, H02G 3/04, H02G 11/00

(54) **ENERGIEFÜHRUNGSVORRICHTUNG MIT WENIGSTENS EINER ANTRIEBSEINRICHTUNG FÜR LANGE VERFAHRWEGE**
ENERGY CHAIN DEVICE WITH AT LEAST ONE DRIVE DEVICE FOR LONG TRAVEL PATHS
DISPOSITIF DE GUIDAGE D'ÉNERGIE COMPRENANT AU MOINS UN DISPOSITIF D'ENTRAÎNEMENT POUR LONGUES COURSES

(30) Priorität: 24.12.2012 DE 102012113082
(43) Veröffentlichungstag der Anmeldung: 28.10.2015
(73) Patentinhaber: Tsubaki Kabelschlepp GmbH, 57482 Wenden-Gerlingen (DE)
(72) Erfinder: KEMPER, Uwe, 57223 Kreuztal (DE); BENSBERG, Jochen, 57271 Hilchenbach (DE); SCHÖLER, Dirk, 57234 Wilnsdorf (DE)
(74) Vertreter: Keenway Patentanwälte Neumann Heine Taruttis
(86) Internationale Anmeldenummer: PCT/EP2013/077589
(87) Internationale Veröffentlichungsnummer: WO 2014/102170

(56) Entgegenhaltungen:
- EP-A1- 0 725 228
- EP-A1- 1 584 841
- WO-A1-03/060346
- WO-A1-2006/005598
- WO-A1-2006/066812
- WO-A1-2011/134991
- DE-C2- 4 435 334
- DE-U1- 20 305 619
- DE-U1- 20 305 619
- DE-U1- 202004 005 858
- DE-U1- 202011 004 784
- DE-U1- 202012 003 907
- DE-U1- 202012 103 407
- US-A1- 2004 011 574
- NAUNIN D ET AL: "SYNCHRONOUS SERVO-DRIVE: A COMPACT SOLUTION OF CONTROL PROBLEMS BY MEANS OF A SINGLE-CHIP MICROCOMPUTER", IEEE TRANSACTIONS ON INDUSTRY APPLICATIONS, IEEE SERVICE CENTER, PISCATAWAY, NJ, US, vol. 26, no. 3, 1 May 1990 (1990-05-01), pages 408 - 413, XP000148198, ISSN: 0093-9994, DOI: 10.1109/28.55970

## Beschreibung

Der Gegenstand der Erfindung bezieht sich auf eine Energieführungsvorrichtung, insbesondere für lange Verfahrwege.

Es ist bekannt, dass zum Führen von Kabeln, Leitungen, Schläuchen und dergleichen zwischen einem ortsfesten und einem beweglichen Anschlusspunkt Energieführungsketten verwendet werden. Mittels einer Energieführungskette werden Kabel, Leitungen, Schläuche und dergleichen zu einem Verbraucher geführt. Hierbei kann es sich beispielsweise um Maschinenteile, Kräne etc. handeln.

Eine Energieführungskette ist gebildet durch eine Anzahl gelenkig miteinander verbundener Glieder. Jedes Glied weist zwei parallel zueinander angeordnete Seitenlaschen und diese verbindende Querstege auf. Die Querstege können mit den Seitenlaschen auch lösbar verbunden sein, so dass Leitungen, Kabel oder Schläuche in den durch die Glieder gebildeten Kanal eingebracht oder ausgetauscht werden können.

Bei Energieführungsketten, die für lange Verfahrwege verwendet werden, besteht das Problem, dass die Reibkräfte zwischen Obertrum und Untertrum sehr groß werden können. In Abhängigkeit von der Länge des Verfahrwegs ist eine betriebssichere Ausgestaltung der Energieführungskette, die im gleitenden Betrieb verwendet wird, d.h., dass die Trume aufeinander gleitend gestaltet werden, kaum realisierbar. Zur Verringerung der Reibungskräfte ist bekannt, dass beispielsweise zwischen einem Obertrum und einem Untertrum ein Tragwagen angeordnet wird, so dass der Obertrum auf dem Tragwagen verfahren wird. Ein derartiger Tragwagen ist durch die WO 03/060346 A1 sowie EP 0 725 228 A1. Ein Obertrum, dessen ein Teilbereich auf dem Tragwagen aufliegt, nimmt den Tragwagen mit, wenn der Obertrum verfahren wird.

Eine Ausgestaltung einer Energieführungskette, die für längere Verfahrwege geeignet ist, ist durch die WO 99/57457 bekannt. Bei dieser Energieführungskette sind bei mindestens einigen Kettengliedern Gleitrollen vorgesehen. Die Anordnung der Gleitrollen ermöglicht eine Bewegung des Obertums auf dem Untertrum, wobei sich die Gleitrollen des Obertrums auf dem Untertrum abstützen.

Die Glieder der Energieführungskette sind gelenkig miteinander verbunden. Aufgrund des Verschleißes der gelenkigen Verbindung der Glieder entsteht ein Spiel zwischen den Gliedern, welches summarisch betrachtet zu einer relevanten Längenänderung der Energieführungskette führen kann. Aufgrund der unterschiedlichen Längenänderungen zwischen Energieführungskette und der in der Energieführungskette geführten Leitungen kann es zu einem Versagen der Energieführungskette mit den Leitungen kommen.

Zusätzlicher Stand der Technik wird in DE 20 2012 103407 U1 und DE DE4 434 334 A offenbart.

Hiervon ausgehend liegt der vorliegenden Erfindung die Zielsetzung zugrunde, eine Energieführungsvorrichtung anzugeben, welche betriebssicherer ausgebildet ist.

Diese Aufgabe wird erfindungsgemäß durch eine Energieführungsvorrichtung mit den Merkmalen des Anspruchs 1 gelöst. Vorteilhafte Weiterbildungen und Ausgestaltungen der erfindungsgemäßen Energieführungsvorrichtung sind Gegenstand der abhängigen Ansprüche. Die in den Ansprüchen einzeln aufgeführten Merkmale sind in beliebiger, technologisch sinnvoller Weise miteinander kombinierbar und können durch erläuternde Sachverhalte in der Beschreibung ergänzt werden, wobei weitere Ausführungsvarianten der Erfindung aufgezeigt werden.

Nach einem erfinderischen Gedanken wird eine Energieführungsvorrichtung nach Patentanspruch 1 vorgeschlagen.

Durch diese erfindungsgemäße Ausgestaltung der Energieführungsvorrichtung wird eine höhere Betriebssicherheit der Energieführungsvorrichtung erreicht. Die Kräfte, die zu einem Verfahren der Energieführungskette notwendig sind, insbesondere bei langen Verfahrwegen, werden zumindest teilweise durch die wenigstens eine Antriebsvorrichtung aufgebracht. Die Energieführungskette ist beispielsweise mit einem Mitnehmer des Krans verbunden. Der Mitnehmer ist mit dem beweglichen Anschlussbereich der Energieführungskette verbunden. Die zur Bewegung der Energieführungskette notwendige Kraft wird nicht nur durch den Kran und den Mitnehmer in die Energieführungskette eingeleitet, sondern auch durch die Antriebseinrichtung. Zur Synchronbewegung bzw. zur Synchronaktion zwischen dem beweglichen Anschlussbereich und der Antriebseinrichtung ist die Steuerungseinheit vorgesehen, die mit der Antriebseinrichtung und der Steuerungseinrichtung der Vorrichtung, bei der es sich beispielsweise um einen Kran handeln kann, signaltechnisch verbunden ist Dadurch, dass die Energieführungskette durch wenigstens eine Antriebseinrichtung in einer Wirkverbindung steht, führen die unterschiedlichen Verhaltensweisen von Energieführungskette und der darin angeordneten Leitungen nicht mehr zum Versagen der Energieführungsvorrichtung. Es ist nicht mehr zwingend notwendig, dass der bewegliche Anschlussbereich mechanisch starr mit dem Mitnehmer einer Vorrichtung gekoppelt wird, da die zur Bewegung der Energieführungskette notwendigen Kräfte, durch die wenigstens eine Antriebseinrichtung aufgebracht werden können.

Die erfindungsgemäße Energieführungsvorrichtung weist eine Kopplungseinrichtung auf, mittels derer der bewegliche Anschlussbereich mit einem Mitnehmer einer Vorrichtung lösbar verbindbar ist. Durch diese Ausgestaltung der erfindungsgemäßen Energieführungsvorrichtung wird eine Feinpositionierung, beispielsweise eines Krans oder eines Portalhubwagens, vereinfacht, da bei der Feinpositionierung der Verfahrweg der Vorrichtung, bei der es sich um einen Kran handeln kann, relativ gering ist. Für diesen Zweck kann eine Entkopplung eines Mitnehmers von dem beweglichen Anschlussbereich der Energieführungskette erfolgen. Wird der Mitnehmer zurück oder eine vorgegebene Strecke hinweg verfahren, so kommt es zu einer Kopplung des Mitnehmers mit dem beweglichen Anschlussbereich. Hierdurch wird sichergestellt, dass die Leitungen, Kabel oder Schläuche, die zu der Vorrichtung geführt sind, keiner mechanischen Beanspruchung ausgesetzt sind, die zu einer Zerstörung derselben führen kann. Es besteht auch die Möglichkeit, dass die Kopplungseinrichtung mit einer Sensorik versehen ist, die die Bewegung des Mitnehmers erfasst und die Kopplungseinrichtung mit dem beweglichen Anschlussbereich weiter verfahren wird, d.h. nachgeführt wird, ohne dass es zu einer Kopplung des Mitnehmers mit dem beweglichen Anschlussbereich kommt. So ist die Kopplungseinrichtung so ausgebildet, dass der bewegliche Anschlussbereich und der Mitnehmer innerhalb einer vorgegebenen Strecke relativ zueinander bewegbar sind.

Die Antriebseinrichtung kann auch als eine Bremseinrichtung verwendet werden. Es besteht auch die Möglichkeit, dass die Antriebseinrichtung lediglich als eine Bremseinrichtung ausgestaltet ist. Des Weiteren kann die Energieführungsvorrichtung zusätzlich zu der wenigstens einen Antriebseinrichtung auch wenigstens eine Bremseinrichtung, die mit der Steuerungseinheit verbunden ist. Durch die Bremswirkung an der Energieführungseinrichtung werden insbesondere die Kräfte auf den Mitnehmer verringert, so dass die Positionierung des Mitnehmers und somit der Vorrichtung vereinfacht werden kann Des Weiteren wird so auch eine Möglichkeit einer Notbremsung bereitgestellt, um im Notfall das bewegte Trum anhalten.

Die Antriebseinrichtung weist wenigstens eine angetriebene Rolle auf. Die Rolle ist in Kontakt mit dem bewegten Trum, so dass die Rotation der Rolle in eine gradlinige Bewegung des bewegten Trums umgewandelt wird.

Um die Kräfte im Wesentlichen gleichmäßig in die Energieführungskette einzubringen, wird vorgeschlagen, dass entlang eines Verfahrwegs des beweglichen Trums mehrere beabstandet zueinander angeordnete Antriebseinrichtungen vorgesehen sind.

Zur seitlichen Stabilität der Energieführungskette entlang Verfahrwegen wird vorgeschlagen, dass ein Führungskanal vorgesehen ist. Wenigstens ein Abschnitt eines Trums, insbesondere des beweglichen Trums ist in dem Führungskanal geführt. Die Antriebseinrichtungen sind vorzugsweise im Bereich des Führungskanals angeordnet.

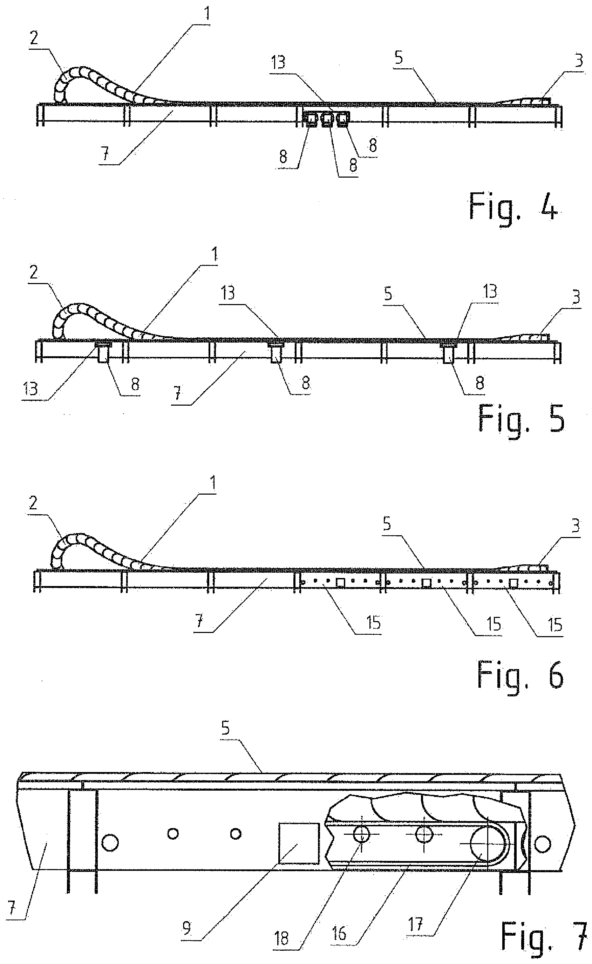

Weitere Vorteile und Einzelheiten der Erfindung werden anhand des in Fig. 5 dargestellten Ausführungsbeispiels erläutert, ohne dass der Gegenstand der Erfindung durch dieses konkrete Ausführungsbeispiel beschränkt wird. Es zeigen:
Fig. 1 schematisch eine nicht zur Erfindung gehörige Energieführungsvorrichtung in einer Vorderansicht,
Fig. 2 eine Detailansicht der Energieführungsvorrichtung nach Fig. 1 in der Vorderansicht,
Fig. 3 eine Detailansicht der Energieführungsvorrichtung nach Fig. 1 in der Seitenansicht,
Fig. 4 ein zweites Ausführungsbeispiel einer nicht zur Erfindung gehörigen Energieführungsvorrichtung in einer Vorderansicht,
Fig. 5 schematisch und in einer Vorderansicht ein Ausführungsbeispiel einer erfindungsgemäßen Energieführungsvorrichtung,
Fig. 6 ein drittes Ausführungsbeispiel einer nicht zur Erfindung gehörigen Energieführungsvorrichtung in einer Vorderansicht,
Fig. 7 eine Detailansicht der Energieführungsvorrichtung nach Fig. 6,
Fig. 8 eine modifizierte Ausführungsform der Energieführungsvorrichtung nach Fig. 6,
Fig. 9 ein viertes Ausführungsbeispiel einer nicht zur Erfindung gehörigen Energieführungsvorrichtung mit einem Zwischenwagen,
Fig. 10 ein Glied einer Energieführungskette mit einer Antriebsvorrichtung,
Fig. 11 schematisch eine Energieführungsvorrichtung mit einer Kopplungseinrichtung und
Fig. 12 schematisch eine Energieführungsvorrichtung mit einer Bremseinrichtung.

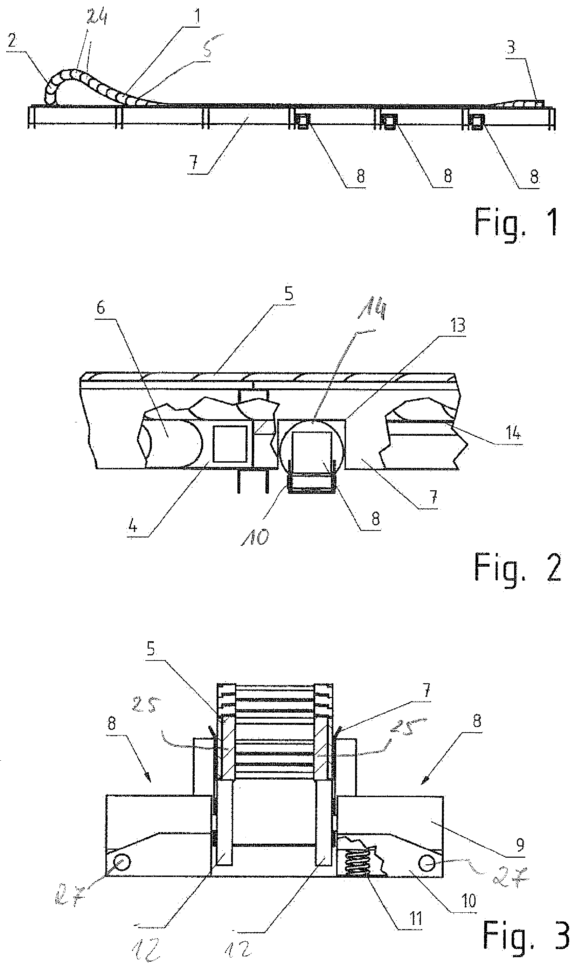

In der Fig. 1 ist schematisch ein erstes Ausführungsbeispiel einer nicht zur Erfindung gehörigen Energieführungsvorrichtung dargestellt. Die Energieführungsvorrichtung weist eine Energieführungskette 1 auf. Die Energieführungskette 1 ist gebildet durch Glieder 24. Die Glieder 24 sind gelenkig miteinander verbunden. In dem dargestellten Ausführungsbeispiel ist die Energieführungskette 1 in einem Führungskanal 7 angeordnet. Die Energieführungskette 1 ist beweglich zwischen einem ortsfesten und einem beweglichen Anschlussbereich. Mit der Referenznummer 3 ist ein Mitnehmeranschluss bezeichnet. Die Energieführungskette 1 weist einen Krümmungsbereich 2 auf, die zwischen einem bewegten Trum 5 und einem stationären Trum 6, der im Führungskanal 7 liegt, gebildet ist. Entlang des Verfahrwegs und beabstandet zueinander sind mehrere Antriebseinrichtungen 8 vorgesehen. Die Antriebseinrichtungen 8 stehen in einer Wirkverbindung mit dem bewegten Trum 5. Nicht dargestellt ist in der Fig. 1 eine Steuereinheit, die mit der Antriebseinrichtung 8 signaltechnisch verbunden ist. Des Weiteren ist in der Fig. 1 keine Vorrichtung dargestellt, die mit dem Mitnehmeranschluss 3 verbindbar ist. Die Steuereinrichtung der Vorrichtung ist mit der Steuereinheit, die nicht dargestellt ist, signaltechnisch verbunden.

Aus der Darstellung nach Fig. 2 und 3 ist ersichtlich, dass die Antriebseinrichtung 8 einen Antriebsmotor 9 aufweist. Der Antriebsmotor 9 ist ein elektrisch betätigbarer Motor. Er weist eine Rolle 12 auf, die von dem Antriebsmotor 9 angetrieben wird. Aus der Darstellung nach Fig. 3 ist ersichtlich, dass die Antriebsrollen 12 der beidseits des Führungskanals 7 angeordneten Betriebsvorrichtungen 8 mit dem bewegten Trum 5 in Wirkverbindung sind. Hierbei liegen die Seitenlaschen 25 auf den Rollen 12 auf. Wird die Antriebsvorrichtung 8 betätigt, so fährt der bewegte Trum 5 in Abhängigkeit von der Drehrichtung der Rollen.

Der Antriebsmotor 9 ist verschwenkbar um eine Achse 27 positionierbar. Benachbart zum Führungskanal 7 ist eine Andrückfeder 11, die als Druckfeder ausgebildet ist, vorgesehen. Durch die Druckfeder kann der Antriebsmotor 9 in Richtung des bewegten Trums 5 hochgedrückt werden. Die Last des bewegten Trums 5 wirkt in umgekehrter Richtung auf die Andrückfeder 9, so dass stets eine Wirkverbindung zwischen den Rollen 12 und dem Obertrum 5 gewährleistet wird. Die Achse 27 erstreckt sich durch eine Motorkonsole 10, die im Wesentlichen U-förmig ausgebildet ist.

In Abhängigkeit von der Bewegungsrichtung des Mitnehmeranschlusses 3 werden die Rollen 12 in die entsprechende Richtung verdreht, so dass der bewegte Trum 5 mittels der Antriebseinrichtungen 8 bewegt werden kann.

Die Antriebseinrichtungen 8 sind zwischen einem nicht dargestellten Festpunktanschluss der Energieführungskette 1 und dem Mitnehmeranschluss 3 in einer Zugendstellung angeordnet. In der Zugendstellung liegt der gesamte bewegbare Trum der Energieführungskette 1 auf Gleitflächen 14 des Führungskanals 7 und den Rollen 12.

Aus der Darstellung nach Fig. 2 ist ersichtlich, dass in den Seitenwänden des Führungskanals 7 Aussparungen 13 vorgesehen sind, durch die sich die Rollen 12 zumindest teilweise in den Führungskanal 7 hinein erstrecken. In dem Bereich der Aussparungen sind keine Gleitflächen 14 vorgesehen. In der Fig. 2 ist der Festpunktanschluss 4 der Energieführungskette dargestellt. An den Festpunktanschluss 4 schließt sich der stationäre Trum 6 an.

Die Antriebseinrichtungen 8 sind vorzugsweise mit einer nicht dargestellten Steuereinheit verbunden. Die Steuereinheit erhält von einer nicht dargestellten Steuerungseinrichtung einer Vorrichtung, die mit dem beweglichen Mitnehmeranschluss 3 verbindbar ist, Signale über die Verfahrrichtung und den Verfahrweg, so dass eine entsprechende Aktivierung der Antriebseinrichtungen 8 möglich ist.

Alternativ kann eine Steuereinheit vorgesehen sein, die mit einer Sensoreinheit verbunden ist, wobei die Sensoreinheit die Bewegung des beweglichen Anschlussbereichs 3 ermittelt. Die Steuereinheit steuert dann die Antriebsrichtungen 8 in Abhängigkeit von der Verfahrrichtung und des Verfahrwegs an. Bei der Sensoreinheit kann es sich beispielsweise um eine Drucksensoreinheit handeln.

In der Fig. 4 ist ein zweites Ausführungsbeispiel einer nicht zur Erfindung gehörigen Energieführungsvorrichtung dargestellt. Die Gestaltung der Energieführungsvorrichtung nach Fig. 4 entspricht im Wesentlichen der Ausgestaltung nach Fig. 1 bis 3, wobei in dem Ausführungsbeispiel nach Fig. 4 die Antriebseinrichtungen 8 im Wesentlichen benachbart zum Festpunktanschluss 4 angeordnet sind.

In der Fig. 5 ist ein Ausführungsbeispiel einer erfindungsgemäßen Energieführungsvorrichtung dargestellt. Der prinzipielle Aufbau der Energieführungsvorrichtung entspricht dem Aufbau des ersten Ausführungsbeispiels nach den Fig. 1 bis 3. In dem Ausführungsbeispiel nach Fig. 5 sind die Antriebseinrichtungen 8 über die gesamte Länge des Führungskanals 7 verteilt angeordnet. Die Antriebseinrichtungen 8 weisen Rollen auf, die an den Außenseiten der Laschen nach dem Prinzip eines Reibradantriebes auf den bewegten Trum 5 einwirken.

In den Fig. 6 und 7 ist ein drittes nicht zur Erfindung gehöriges Ausführungsbeispiel einer Energieführungsvorrichtung dargestellt. Die Energieführungsvorrichtung weist eine Energieführungskette 1 auf, die in einem Führungskanal 7 angeordnet ist. Innerhalb des Führungskanals 7 sind mehrere Antriebsvorrichtungen 15 angeordnet. Die Antriebseinrichtungen 15 weisen einen Antriebsmotor 9 mit einer nicht dargestellten Rolle auf. Beabstandet zum Antriebsmotor 9 ist eine Umlenkrolle 17 vorgesehen. Ein Endlosband 16 wird mittels des Antriebsmotors 9 angetrieben. Auf dem Endlosband 16 liegt der bewegliche Trum 5 der Energieführungskette auf. Zur Abstützung des Endlosbands 16 sind Stützrollen 18 vorgesehen. Der Antriebsmotor 9 ist mit einer nicht dargestellten Steuereinrichtung verbunden.

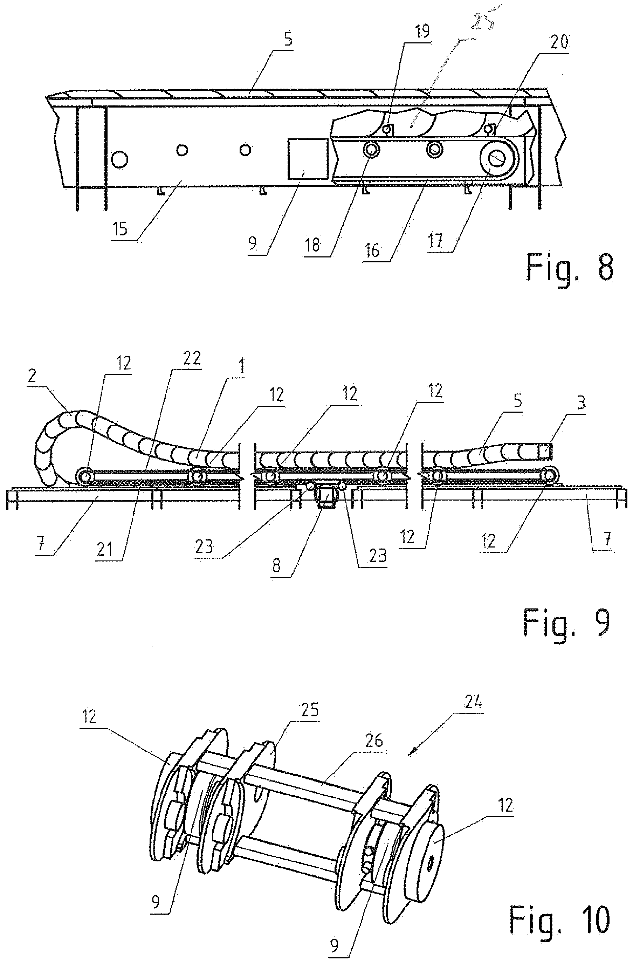

Eine Modifikation des in den Fig. 6 und 7 dargestellten Ausführungsbeispiels einer Energieführungsvorrichtung ist in der Fig. 8 dargestellt. Das Endlosband 16 ist mit Mitnehmern 20 versehen. An den beiden Seitenlaschen 25 der Glieder des beweglichen Trums 5 sind Mitnehmerbolzen 19 vorgesehen, die von den Mitnehmern 20 mitgenommen werden können. Dadurch kommt es zu einem Vortrieb der Energieführungskette.

Fig. 9 zeigt ein noch weiteres Ausführungsbeispiel einer nicht zur Erfindung gehörigen Energieführungsvorrichtung. In dem dargestellten Ausführungsbeispiel ist zwischen dem bewegbaren Trum 5 und dem stationären Trum 6 ein Zwischenwagen 21 angeordnet. Der Zwischenwagen 21 ist auf dem stationären Trum verfahrbar. Hierzu ist eine Antriebsvorrichtung vorgesehen, die einen Antriebsmotor 9 aufweist. Der Antriebsmotor 8 treibt beispielsweise eine Rollenkette oder einen Zahnriemen 22 an. Der Zahnriemen 22 wird durch die Umlenkrollen 23 um eine nicht dargestellte Triebrolle, die von dem Antriebsmotor 9 angetrieben wird, umgelenkt. Der Zahnriemen 22 treibt die Rollen 12 an. Der Zwischenwagen 21 wird mit der halben Geschwindigkeit des Mitnehmeranschlusses 3 verfahren.

Aus der Fig. 10 ist eine Ausgestaltung eines Kettengliedes 24 ersichtlich. Das Kettenglied 24 ist durch Seitenlaschen 25 und diese verbindende Querstege 26 gebildet. Ein Antriebsmotor 9, der die Antriebseinrichtung bildet, ist unmittelbar an den Laschen 25 angeordnet. Der Antriebsmotor 9 treibt Rollen 12 an, die auf einer nicht dargestellten Ablage rollen. Die Anschlussleitungen für den Antriebsmotor 9 können in der durch die Glieder 24 gebildeten Energieführungskette geführt werden. Es ist auch möglich, dass die Antriebsvorrichtung nicht an den Seitenlaschen 25, sondern an den Querstegen 26 angeordnet ist.

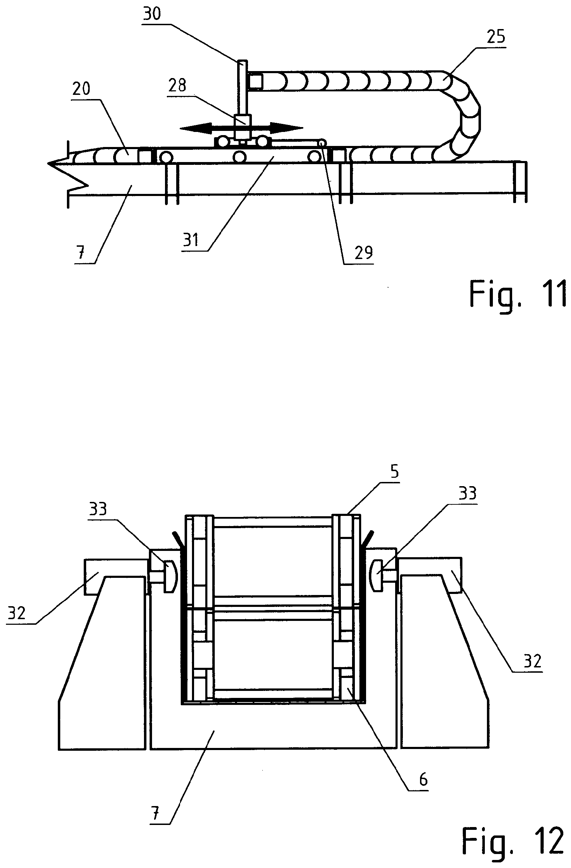

Fig 11 zeigt schematisch eine Energieführungsvorrichtung mit einer Kopplungseinrichtung 28. Die Kopplungseinrichtung 28 weist eine Führung und ein Führungsteil auf, welches mit einem Mitnehmer 30 einer nicht dargestellten Vorrichtung verbunden ist. Die Kopplungseinrichtung 28 hat wenigstens einen Sensor 29, bei dem es sich beispielsweise um einen Wegsensor handeln kann. Die Kopplungseinrichtung 28 ist im beweglichen Anschlussbreich 31 mit dem Mitnehmer 20 der Energieführungseinrichtung verbunden. Des Weiteren ist die Kopplungseinrichtung 28 mit einem Abschnitt einer Energieführungseinrichtung verbunden. Dies ist nicht zwingend notwendig. Der Mitnehmer 30 ist in Richtung des Pfeils hin und her verfahrbar. In Abhängigkeit vom Verfahrweg des Mitnehmers liefert der Sensor 29 ein Signal an die nicht dargestellte Steuerungseinheit, durch welches die wenigstens eine Antriebseinrichtung und/oder die Bremseinrichtung aktiviert oder deaktiviert.

Ein Ausführungsbeispiel einer Bremseinrichtung 32 ist in der Figur 12. dargestellt. Die Bremseinrichtung 32 weist eine Bremsbacke 33, die zu Anlage an ein Glied der Energieführungseinrichtung gebracht werden kann. Die Bremseinrichtung kann pneumatisch, hydraulisch oder elektrisch betätigtbar sein. Vorzugsweise sind gegenüberliegen Paare von Bremseinrichtungen 32 vorgesehen.

### Bezugszeichenliste

1 Energieführungskette
2 Krümmungsbereich
3 Mitnehmeranschluss
4 Festpunktanschluss
5 bewegbarer Trum
6 stationärer Trum
7 Führungskanal
8 Antriebseinrichtung
9 Antriebsmotor
10 Motorkonsolen
11 Andrückfeder
12 Rollen
13 Aussparung
14 Gleitfläche
15 Antriebseinrichtung
16 Endlosband
17 Umlenkrolle
18 Stützrollen
19 Mitnehmerbolzen
20 Mitnehmer
21 Zwischenwagen
22 Rollenkette/Zahnriemen
23 Umlenkrolle
24 Glied
25 Kettenlasche
26 Quersteg
27 Achse
28 Kopplungseinrichtung
29 Sensor
30 Mitnehmer
31 beweglicher Anschlussbereich
32 Bremseinrichtung
33 Bremsbacke

## Patentansprüche

1. Energieführungsvorrichtung umfassend
wenigstens eine Energieführungskette (1)
zum Führen von Leitungen, Kabeln, Schläuchen oder dergleichen zwischen einem ortsfesten und einem beweglichen Anschlussbereich (4, 3) unter Ausbildung eines Krümmungsbereichs (2) zwischen einem bewegten Trum (5) und einem stationären Trum (6), mit einer Anzahl gelenkig miteinander verbundener Glieder (24), die durch zueinander parallel angeordnete Seitenlaschen (25) und diese verbindende Querstege (26) gebildet ist,
**gekennzeichnet durch**
mehrere entlang eines Verfahrweges des beweglichen Trums (5) beabstandet zueinander angeordnete Antriebseinrichtungen (8), wobei jede Antriebseinrichtung (8) einen elektrisch betätigbaren Antriebsmotor (9) aufweist, der eine Rolle (12) antreibt, wobei die Energieführungsvorrichtung einen Führungskanal (7) aufweist in welchem wenigstens ein Abschnitt eines der Trume (5, 6) geführt ist, wobei die Antriebseinrichtungen (8) über die gesamte Länge des Führungskanals (7) verteilt angeordnet sind und die Rollen (12) an den Außenseiten der Seitenlaschen (25) nach dem Prinzip eines Reibradantriebes auf den bewegten Trum (5) einwirken und
durch eine Steuerungseinheit,
die mit den Antriebseinrichtungen (8) signaltechnisch verbunden und mit einer Steuerungseinrichtung einer Vorrichtung, die mit dem beweglichen Anschlussbereich (3) verbindbar ist, signaltechnisch verbindbar ist.

2. Energieführungsvorrichtung nach Anspruch 1, **dadurch gekennzeichnet, dass** eine Kopplungseinrichtung vorgesehen ist, mittels derer der bewegliche Anschlussbereich (3) mit einem Mitnehmer einer Vorrichtung lösbar verbindbar ist.

3. Energieführungsvorrichtung nach Anspruch 2, **dadurch gekennzeichnet, dass** die Kopplungseinrichtung so ausgebildet ist, dass der bewegliche Anschlussbereich (3) und der Mitnehmer innerhalb einer vorgegebenen Strecke relativ zueinander bewegbar sind.

4. Energieführungsvorrichtung nach einem der Ansprüche 1 bis 3, **dadurch gekennzeichnet, dass** die Antriebseinrichtung (9, 15) als eine Antriebs- oder auch als Bremseinrichtung ausgebildet ist.

5. Energieführungsvorrichtung nach einem der Ansprüche 1 bis 4, **dadurch gekennzeichnet, dass** wenigstens eine Bremseinrichtung (32) vorgesehen ist.

## Claims

1. Cable drag apparatus comprising at least one cable drag chain (1) for guiding lines, cables, hoses or the like between a stationary and a movable connector region (4, 3) with the configuration of a curvature region (2) between a moving run (5) and a stationary run (6), with a number of links (24) which are connected to one another in an articulated manner and are formed by way of side plates (25) which are arranged parallel to one another and transverse webs (26) which connect them, **characterized by** a plurality of drive devices (8) which are arranged spaced apart from one another along a movement path of the movable run (5), each drive device (8) having an electrically actuable drive motor (9) which drives a roller (12), wherein the cable drag apparatus has a guide channel (7), in which at least one section of one of the runs (5,6) is guided, wherein the drive devices (8) are distributed over the entire length of the guide channel (7) and the rollers (12) act on the moving run (5) on the side plates (25) in accordance with the principle of a friction wheel drive, and by a control unit which is connected in signal terms to the drive devices (8) and which can be connected in signal terms to a control device of an apparatus which can be connected to the movable connector region (3).

2. Cable drag apparatus according to Claim 1, **characterized in that** a coupling device is provided, by means of which the movable connector region (3) can be connected releasably to a driver of an apparatus.

3. Cable drag apparatus according to Claim 2, **characterized in that** the coupling device is configured in such a way that the movable connector region (3) and the driver can be moved relative to one another within a predefined distance.

4. Cable drag apparatus according to one of Claims 1 to 3, **characterized in that** the drive apparatus (9, 15) is configured as a drive device or else as a brake device.

5. Cable drag apparatus according to one of Claims 1 to 4, **characterized in that** at least one brake device (32) is provided.

## Revendications

1. Arrangement d'acheminement d'énergie, comprenant au moins une chaîne de transport d'énergie (1) destinée à guider des lignes, câbles, tuyaux ou similaires entre une zone de raccordement fixe et une mobile (4, 3) en formant une zone de courbure (2) entre un brin mobile (5) et un brin fixe (6), comprenant une pluralité de maillons (24) reliés les uns aux autres, qui sont formés par des languettes latérales (25) disposées en parallèle et des éléments jointifs transversaux (26) qui les relient, **caractérisé par** plusieurs dispositifs d'entraînement (8) disposés espacés les uns des autres le long d'un trajet de déplacement du brin mobile (5), chaque dispositif d'entraînement (8) possédant un moteur d'entraînement (9) pouvant être actionné électriquement, lequel entraîne un galet (12), l'arrangement d'acheminement d'énergie comportant un canal de guidage (7) dans lequel au moins une section de l'un des brins (5, 6) est guidée, les dispositifs d'entraînement (8) étant répartis sur toute la longueur du canal de guidage (7) et les galets (12) agissant sur le brin mobile (5) sur les côtés extérieurs des languettes latérales (25) selon le principe d'un entraînement par galet de friction, et par une unité de commande, qui est connectée de manière signalétique aux dispositifs d'entraînement (8) et peut être connectée de manière signalétique à un dispositif de commande d'un arrangement, lequel peut être relié à la zone de raccordement mobile (3).

2. Arrangement d'acheminement d'énergie selon la revendication 1, **caractérisé en ce qu'**un dispositif d'accouplement est présent, au moyen duquel la zone de raccordement mobile (3) peut être reliée de manière amovible à un élément d'entraînement d'un arrangement.

3. Arrangement d'acheminement d'énergie selon la revendication 2, **caractérisé en ce que** le dispositif d'accouplement est configuré de telle sorte que la zone de raccordement mobile (3) et l'élément d'entraînement peuvent se déplacer l'un par rapport à l'autre à l'intérieur d'un segment prédéfini.

4. Arrangement d'acheminement d'énergie selon l'une des revendications 1 à 3, **caractérisé en ce que** le dispositif d'entraînement (9, 15) est réalisé sous la forme d'un dispositif d'entraînement ou aussi sous la forme d'un dispositif de freinage.

5. Arrangement d'acheminement d'énergie selon l'une des revendications 1 à 4, **caractérisé en ce qu'**au moins un dispositif de freinage (32) est présent.
